# EUROPÄISCHE PATENTSCHRIFT

(11) **EP 2 193 966 B1**
(45) Veröffentlichungstag und Bekanntmachung des Hinweises auf die Patenterteilung: **11.11.2015**
(21) Anmeldenummer: 09015055.8
(22) Anmeldetag: 04.12.2009
(51) Int. Cl.: B60T 13/38, B60T 13/68, B60T 15/04, B60T 8/32, B60T 8/34, B60T 13/74, B60T 17/18, B60T 17/22

(54) **Feststellbremsanlage für ein Nutzfahrzeug**
Hand brake for a commercial vehicle
Installation d'un frein de stationnement pour un véhicule utilitaire

(30) Priorität: 05.12.2008 DE 102008060735
(43) Veröffentlichungstag der Anmeldung: 09.06.2010
(73) Patentinhaber: KNORR-BREMSE Systeme für Nutzfahrzeuge GmbH, 80809 München (DE)
(72) Erfinder: Kaupert, Oliver, 80995 München (DE)
(74) Vertreter: Schönmann, Kurt

(56) Entgegenhaltungen:
- DE-A1- 2 658 205
- DE-A1- 10 336 611
- DE-A1-102006 041 009
- DE-A1-102007 002 020
- DE-A1-102007 014 423
- DE-A1-102007 016 335
- DE-A1-102007 051 150
- FR-A1- 2 145 353
- FR-A1- 2 342 876
- FR-A1- 2 366 968
- GB-A- 2 193 772

## Beschreibung

Die Erfindung betrifft eine Feststellbremsanlage für ein Nutzfahrzeug. Eine derartige Bremsanlage ist aus der DE 10 2006 041 009 A1 bekannt.

Bremsanlagen von Nutzfahrzeugen arbeiten vielfach mit Druckluft. Die Druckluft wird von einem mit dem Antriebsmotor des Kraftfahrzeugs gekoppelten beziehungsweise koppelbaren Kompressor an eine Luftaufbereitungsanlage geliefert. Die Luftaufbereitungsanlage stellt häufig eine Vielzahl von Funktionalitäten zur Verfügung, so zum Beispiel die Lufttrocknung und Luftreinigung, die Druckregelung und die Verteilung der Druckluft auf die verschiedenen Verbraucherkreise mittels einer Mehrkreisschutzventileinrichtung. Moderne Luftaufbereitungsanlagen sind vielfach mit einer elektronischen Steuereinheit ausgestattet, die im Rahmen zahlreicher dieser Funktionen steuernden beziehungsweise regelnden Einfluss nimmt.

Ein wichtiger Bestandteil der Bremsanlage des Nutzfahrzeugs ist die Feststellbremse. Zur Bedienung der Feststellbremse ist im Fahrerhaus vielfach ein Handbremsventil angeordnet, wobei durch die Betätigung des Handbremsventils Federspeicherzylinder, die vorzugsweise der Hinterachse des Nutzfahrzeugs zugeordnet sind, belüftet beziehungsweise entlüftet werden können. Im entlüfteten Zustand der Federspeicherzylinder ist das Nutzfahrzeug gebremst, während die Feststellbremse durch Belüften der Federspeicherzylinder gelöst werden kann. Die Belüftung und die Entlüftung der Feststellbremse erfolgen über ein Relaisventil, das mit einem Druckluftvorrat und den Federspeicherzylindern in Verbindung steht, wobei ein Steuereingang des Relaisventils von dem Handbremsventil angesteuert wird.

Die Federspeicherzylinder sind vielfach in einen Kombizylinder integriert. Bei einem Kombizylinder handelt es sich um eine Einrichtung, die sowohl die Federspeicherbremsfunktion als auch die Betriebsbremsfunktion realisiert. Im Zusammenhang mit solchen Kombizylindern erweist es sich als problematisch, wenn bei gespannter Feststellbremse zusätzlich die Betriebsbremse betätigt wird, denn dann wirken Kräfte auf die Druckstange des Kombizylinders und die der Druckstange im Kraftfluss nachgeordneten Komponenten, die überhöht sind und daher zu einem frühzeitigen Verschleiß der Bremse führen können. Weitere Probleme können damit zusammenhängen, dass bei gelöster Feststellbremse, also komprimierter Speicherfeder, ein Betätigen der Betriebsbremse Einfluss auf den Zustand der Speicherfeder nimmt, da nämlich bei Druckbeaufschlagung der Betriebsbremsdruckkammer keine auf den Betriebsbremskolben wirkenden Rückstellkräfte mehr zum Federspeicherkolben weitergeleitet werden. Die Speicherfeder wird also bei jeder Betriebsbremsung teilweise entspannt, um bei Beendigung der Betriebsbremsung durch die dann wieder weitergeleiteten Rückstellkräfte des Betriebsbremskolbens erneut gespannt zu werden. Dies hat eine zusätzliche Belastung des Speicherfedermaterials zur Folge, was ebenfalls einen zusätzlichen Beitrag zum Verschleiß der Bremse liefert.

Der Erfindung liegt die Aufgabe zugrunde, eine Feststellbremsanlage zur Verfügung zu stellen, die besonders verschleißarm ist.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung besteht in einer Feststellbremsanlage für ein Nutzfahrzeug, mit einem Handbremsventil, das geeignet ist, einen ersten Druck unmittelbar oder mittelbar zur Verfügung zu stellen, einem Betriebsbremsventil, das geeignet ist, einen zweiten Druck unmittelbar oder mittelbar zur Verfügung zu stellen, einem Relaisventil, das einen Steuereingang, dem der erste oder der zweite Druck zuführbar ist, einen mit einem Druckluftvorrat des Nutzfahrzeugs verbundenen Arbeitseingang und einen mit mindestens einer Federspeicherdruckkammer eines Kombizylinders verbundenen Arbeitsausgang aufweist, einem Steuerventil, welches einen ersten Drucklufteingang, einen zweiten Drucklufteingang und einen mit dem Steuereingang des Relaisventils gekoppelten Druckluftausgang aufweist, wobei dem ersten Drucklufteingang der erste Druck und dem zweiten Drucklufteingang der zweite Druck zuführbar sind und wobei an dem Druckluftausgang der höhere der an den Drucklufteingängen anliegenden Drücke anliegt. Hierdurch wird sichergestellt, dass beim Betätigen der Betriebsbremse die Feststellbremsendruckkammer des Kombizylinders in jedem Fall belüftet wird. Ausgehend von dem Zustand einer entlüfteten Federspeicherbremse hat dies zur Folge, dass die Druckstange des Kombizylinders nur durch den Druck der Betriebsbremse vorangetrieben wird, die Speicherfeder hingegen nicht mehr auf die Druckstange wirkt. Geht man vom Zustand einer belüfteten Federspeicherbremse aus, wirkt aufgrund der Betriebsbremsung in der Druckkammer der Feststellbremse ein höherer Druck als vor der Betriebsbremsung. Dies liegt daran, dass vor der Betriebsbremsung der Steuereingang des Relaisventils durch das Handbremsventil belüftet wird, welches im Allgemeinen einen niedrigeren Druck als das Betriebsbremsventil liefert. Beispielsweise kann das Handbremsventil bei gelöster Feststellbremse 8 bar durchsteuern, während das Betriebsbremsventil mit einem Steuerdruck von 10 bar arbeitet. Folglich wird der Entlastung des Federspeicherkolbens aufgrund des Druckaufbaus in der Druckkammer der Betriebsbremse durch eine Erhöhung des Drucks in der Druckkammer der Feststellbremse entgegengewirkt, so dass eine Veränderung des Kompressionszustandes der Speicherfeder verringert oder gänzlich vermieden wird. Die den Druckkammern des Kombizylinders zur Verfügung gestellten Drücke müssen nicht unbedingt unmittelbar von dem Handbremsventil beziehungsweise dem Betriebsbremsventil zur Verfügung gestellt werden. Ebenfalls ist eine mittelbare Zuführung möglich, indem das Handbremsventil und/oder das Betriebsbremsventil zunächst Relaisventile ansteuern und erst der von diesen Relaisventilen durchgesteuerte Druck als Steuerdruck für das nachfolgende eigentliche Relaisventil der Feststellbremse verwendet wird.

Die Erfindung umfasst: eine elektronische Steuereinheit und eine zwischen dem Handbremsventil und dem Steuereingang des Relaisventils angeordneten, von der elektronischen Steuereinheit elektrisch schaltbare Ventileinrichtung, wobei bei Anwesenheit einer Person zur Führung des Nutzfahrzeugs ein von der elektronischen Steuereinheit elektrisch auswertbarer Indikator zur Verfügung stellbar ist und wobei die elektronische Steuereinheit geeignet ist, mittels der elektrisch schaltbaren Ventileinrichtung ein Belüften des mindestens einen Federspeicherzylinders zu verhindern, wenn der Indikator nicht vorliegt. Ohne weitere Vorkehrungen kann es bei pneumatischen Feststellbremsanlagen zu problematischen Szenarien kommen. Es ist beispielsweise denkbar, dass ein Fahrer den Motor seines drucklosen Fahrzeugs startet und sogleich das Handbremsventil in eine Stellung bringt, mit der der Steuereingang des Relaisventils belüftet werden könnte und somit auch die Federspeicherzylinder in ihren belüfteten Zustand überführt werden könnten. Da die Bremsanlage jedoch in diesem Moment noch drucklos ist, wird die Feststellbremse nicht gelöst. Fällt es dem Fahrer in dem Moment ein, das Führerhaus zu verlassen, beispielsweise um die Scheiben des Fahrzeugs von Eis zu befreien, so baut sich der Druck im Fahrzeug nach und nach auf, wobei dieser dann irgendwann auch ausreichend ist, um die Feststellbremse zu lösen. Das Fahrzeug kann somit bei unbesetztem Führerhaus in Bewegung geraten, was zu gefährlichen Situationen führen kann. Insbesondere in Ländern Nordeuropas ist es Vorschrift, Nutzfahrzeuge mit Sicherheitseinrichtungen auszustatten, die ein Lösen der Feststellbremse bei unbesetztem Führerhaus vermeiden. In der DE 103 41 723 A1 sind Möglichkeiten angegeben, wie diese Sicherheitsfunktion - die so genannte Northland Park Brake Function - zur Verfügung gestellt werden kann. Es ist beispielsweise vorgesehen, ein die Feststellbremsanlage versorgendes Überströmventil mit einem Steuereingang auszustatten, wobei durch Belüften des Steuereingangs das Überströmventil in einen Sperrzustand überführt wird. Der Steuereingang des Überströmventils ist nun mit einem Magnetventil gekoppelt, welches das Belüften und das Entlüften des Steuereingangs in Abhängigkeit seiner Ansteuerung durch eine elektronische Steuereinheit bewerkstelligt. Gleichzeitig wird der elektronischen Steuereinheit Information darüber zur Verfügung gestellt, ob sich der Fahrer im Führerhaus befindet, beispielsweise auf der Grundlage eines Sitzsensors, eines Gurtanlegesensors oder eines Pedalbetätigungssensors, so dass ein Druckaufbau in der Feststellbremsanlage durch Sperren des Überströmventils so lange verhindert werden kann, wie sich der Fahrer nicht im Führerhaus befindet. Gleichzeitig kann ein Befüllen der Feststellbremsanlage auch noch so lange verhindert werden, wie der in den Betriebsbremskreisen gemessene Druck eine gewisse Druckschwelle noch nicht überschritten hat, nämlich den für die so genannte Hilfsbremswirkung erforderlichen Betriebsbremsdruck. Dieses Konzept ist nützlich und zuverlässig, wobei jedoch zu beachten ist, dass das sperrbare Überströmventil auch die Anhängerbremsanlage mit Druckluft versorgt. Mit Freigabe des Überströmventils und somit der nachfolgenden Befüllung der Anhängerbremsanlage sinkt der Druck im System also wieder ab und nachfolgend nach und nach bei kontinuierlicher Nachförderung von Druckluft wieder an. Der Fahrer muss unter Umständen also noch längere Zeit auf das Lösen der Feststellbremse warten, obwohl aufgrund der sicherheitsrelevanten Überschreitung der Hilfsbremsdruckschwelle eine Warndruckmeldung bereits erloschen ist und sich das Handbremsventil in seinem geöffneten Zustand befindet. Dies ist mitunter für den Fahrer nicht nachvollziehbar, oder er vermutet sogar einen Defekt der Bremsanlage. Die Ventileinrichtung, welche den Steuerdruck des Handbremsventils wahlweise wirksam an den Steuereingang des Relaisventils weitergibt oder diese Weitergabe sperrt, nimmt somit ausschließlich einen Einfluss auf die Feststellbremsanlage. Der im Zusammenhang mit dem Stand der Technik geschilderte unerwartete Effekt eines Druckabfalls, der ein Spannen der Feststellbremse bei erloschener Warnlampe und offenem Handbremsventil bewirkt, ist somit also ausgeschlossen.

Nützlicher weise ist vorgesehen, dass das Steuerventil ein Wechselventil ist. Ein solches Wechselventil lässt sich als Rückschlagventil mit zwei Eingänge und zwei Ventilsitzen beschreiben. Der jeweils höhere an den Eingängen anliegende Druck wird durch gesteuert , indem ein Ventilkörper den Ventilsitz zum anderen Eingang aufgrund der Druckdifferenz zwischen den Eingängen verschließt.

Gemäß einer Ausführungsform der vorliegenden Erfindung ist vorgesehen, dass die Ventileinrichtung zwischen dem Steuerventil und dem Steuereingang des Relaisventils angeordnet ist, so dass an einem Drucklufteingang der Ventileinrichtung entweder der erste oder der zweite Druck anliegt.
In diesem Zusammenhang ist eine Sicherheitsfunktionalität nützlich, die vorsieht, dass ein mit der elektronischen Steuereinheit elektrisch gekoppelter Drucksensor zum Erfassen eines Ausgangsdruckes des Relaisventils vorgesehen ist, wobei die elektronische Steuereinheit geeignet ist, ein Sperren der Ventileinrichtung zu verhindern, wenn der Ausgangsdruck des Relaisventils einen vorgegebenen Schwellenwert überschreitet. Betätigt der Fahrer nämlich bei geöffneter Ventileinrichtung und gespannter Feststellbremse das Betriebbremsventil, so kommt es zu einem Druckaufbau am Ausgang des Relaisventils der im Kombizylinder vom Betriebsbremsdruck kompensiert wird. Ein Lösen der Bremse bleibt daher aus. Wird nun im diesem Zustand die Ventileinrichtung geschlossen, so dass der Weg von dem Steuerventil zum Steuereingang des Relaisventils gesperrt wird, so würde ein Entlüften des Betriebsbremsventils dazu führen, dass sich zwar der Betriebsbremsdruck abbaut, der auf den Steuereingang des Relaisventils wirkende Druck hingegen nicht. Folglich könnte es so zu einem unbeabsichtigten Lösen der Bremse kommen. Diesem Umstand wird begegnet, indem der Druck am Ausgang des Relaisventils mit einem Drucksensor gemessen wird. Liegt hier ein Druck vor, der zum Lösen der Feststellbremse führen würde, so sorgt die Steuerung dafür, dass das die als Magnetventil ausgelegte Ventileinrichtung nicht angezogen werden kann.

Auf eine solche Sicherheitsfunktionalität kann dadurch verzichtet werden, dass die Ventileinrichtung in einem den ersten Druck führenden Leitungsabschnitt angeordnet ist und der erste Drucklufteingang des Steuerventils mit einem Druckluftausgang der Ventileinrichtung verbunden ist, während dem zweiten Drucklufteingang des Steuerventils der zweite Druck direkt zuführbar ist. Es kann zwar dann mitunter dennoch sinnvoll sein, einen Drucksensor zum Erfassen des Ausgangsdruckes des Relaisventils vorzusehen. Allerdings ist ein "Einsperren" des Druckes zwischen der Ventileinrichtung und dem Steuereingang des Relaisventils auch ohne Drucksensor ausgeschlossen.

Nützlicherweise ist vorgesehen, dass die Ventileinrichtung ein 2/2-Wegeventil ist. Ein 2/2-Wegeventil ist ausreichend für die geforderte Funktionalität, nämlich das Sperren beziehungsweise das Freigeben für die Belüftung oder die Entlüftung des Relaisventil-Steuereingangs bei entsprechender Betätigung des Handbremsventils.

Es ist bevorzugt, dass die Ventileinrichtung im stromlosen Zustand das Handbremsventil mit dem Steuereingang des Relaisventils pneumatisch verbindet und im bestromten Zustand das Handbremsventil von dem Steuereingang des Relaisventils pneumatisch trennt. Wird das Nutzfahrzeug in Betrieb genommen, so wird die Ventileinrichtung zunächst bestromt, so dass sicherheitshalber in jedem Fall eine Belüftung der Federspeicherzylinder verhindert wird. Erst wenn dann die sicherheitsrelevanten Überwachungsfunktionen der elektronischen Steuereinheit gegriffen haben, ist es möglich, die Ventileinrichtung in ihren stromlosen Zustand zu überführen, so dass über das Relaisventil die Federspeicherzylinder belüftet werden können.

Es ist weiterhin von besonderem Vorteil, dass ein mit der elektronischen Steuereinheit elektrisch gekoppelter Drucksensor zum Erfassen eines druckluftvorratsseitigen Druckes vorgesehen ist, wobei die elektronische Steuereinheit geeignet ist, mittels der elektrisch schaltbaren Ventileinrichtung ein Belüften des mindestens einen Federspeicherzylinders zu verhindern, wenn ein von dem Drucksensor erfasster Druck unterhalb eines Druckschwellenwertes liegt. Zusätzlich zur Anwesenheitsprüfung kann somit auch eine Drucküberwachung vorgenommen werden und im Zusammenhang mit der zwischen Handbremsventil und Steuereingang des Relaisventils angeordneten Ventileinrichtung nützlich zum Einsatz gebracht werden. Die erfindungsgemäße Feststellbremsanlage kann also auch in der Weise betrieben werden, dass ein Belüften des Relaisventilsteuereingangs nur dann möglich ist, wenn zwei Bedingungen erfüllt sind, nämlich der Hilfsbremsdruck in den Betriebsbremskreisen erreicht ist und der Fahrer anwesend ist.

Die Erfindung ist in besonders nützlicher Weise dadurch weitergebildet, dass das Relaisventil und/oder die Ventileinrichtung und/oder der Drucksensor und/oder die elektronische Steuereinheit in eine elektronische Luftaufbereitungsanlage integriert sind. Es sind also hochintegrierte Lösungen möglich.

Die Erfindung wird nun mit Bezug auf die begleitende Zeichnung anhand einer besonders bevorzugten Ausführungsform beispielhaft erläutert.

Es zeigen:
- Figur 1: eine schematische Darstellung einer erfindungsgemäßen Feststellbremsanlage;
- Figur 2: eine schematische Darstellung eines Kombizylinders zur Verwendung in einer erfindungsgemäßen Feststellbremsanlage in drei verschiedenen Betriebszuständen (Figur 2a, Figur 2b, Figur 2c);
- Figur 3: einen Teil einer Luftaufbereitungsanlage mit einer darin teilweise integrierten erfindungsgemäßen Feststellbremsanlage;
- Figur 4: einen Teil einer Luftaufbereitungsanlage mit einer darin teilweise integrierten erfindungsgemäßen Feststellbremsanlage in einer weiteren Ausführungsform.

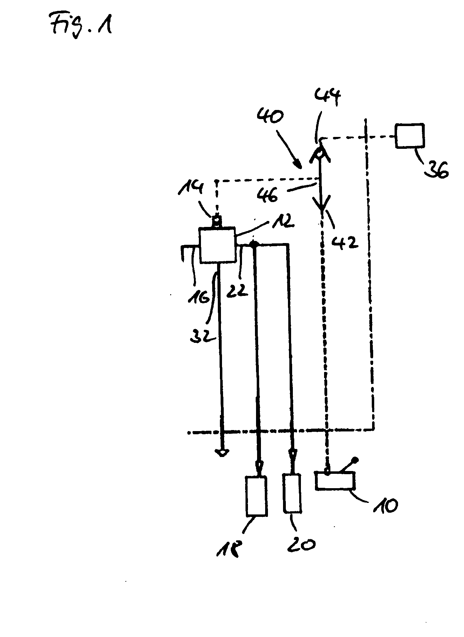

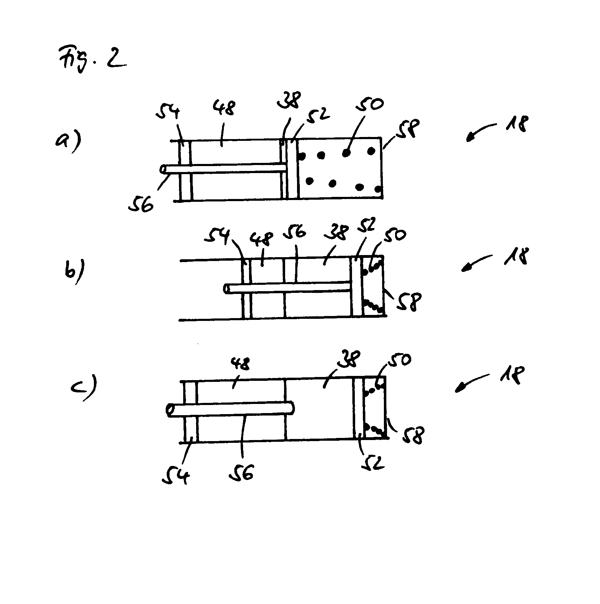

Figur 1 zeigt eine schematische Darstellung einer erfindungsgemäßen Feststellbremsanlage. Figur 2 zeigt eine schematische Darstellung eines Kombizylinders zur Verwendung in einer erfindungsgemäßen Feststellbremsanlage in drei verschiedenen Betriebszuständen (Figur 2a, Figur 2b, Figur 2c). Die Feststellbremsanlage weist als zentrale Baugruppen ein meist im Führerhaus des Nutzfahrzeugs angeordnetes Handbremsventil 10 und ein von diesem Handbremsventil 10 ansteuerbares Relaisventil 12 auf. Das Relaisventil 12 hat für diese Zwecke einen Steuereingang 14. Weiterhin ist das Relaisventil 12 mit einem Arbeitseingang 16 und einem Arbeitsausgang 22 ausgestattet, wobei der Arbeitseingang 16 mit einem nicht dargestellten Druckluftvorrat in Verbindung steht. Das Relaisventil 12 hat weiterhin einen Entlüftungsausgang 32. Der Arbeitsausgang 22 des Relaisventils 12 ist mit Federspeicherdruckluftkammern 38 von Kombizylindern 18, 20 verbunden, die vorzugsweise der Hinterachse des Nutzfahrzeugs zugeordnet sind. Weitere Anschlüsse am Arbeitsausgang 22 des Relaisventils 12 können einem Anhängersteuermodul des Nutzfahrzeugs zugeführt werden, um auf diese Weise die Bremsfunktionen des Anhängersteuermoduls ebenfalls beeinflussen zu können. Die Kombizylinder 18, 20, von welchen der Kombizylinder 18 in Figur 2 beispielhaft in drei verschiedenen Betriebszuständen dargestellt ist, weisen neben der bereits erwähnten Federspeicherdruckkammer 38 die folgenden weiteren Komponenten auf: eine Betriebsbremsdruckkammer 48, eine Speicherfeder 50, einen Federspeicherkolben 52, einen Betriebsbremskolben 54 und eine Druckstange 56. Die genannten Komponenten und Kammern sind in einem ein- oder mehrteiligen Gehäuse 58 untergebracht. Die Druckstange 56 ist kraftvermittelnd mit nicht dargestellten Bremsaktuatoren, beispielsweise einer Scheibenbremse, verbunden.

Der Betriebszustand gemäß Figur 2a wird dann eingenommen, wenn die Federspeicherdruckkammer 38 entlüftet ist. Dann gelingt es der Speicherfeder 50, den Federspeicherkolben 52 und somit die Druckstange 56 voranzutreiben und auf diese Weise die nicht dargestellten Bremsaktuatoren zu betätigen. Der Betriebszustand gemäß Figur 2b wird hingegen eingenommen, wenn die Federspeicherdruckkammer 38 belüftet wird, so dass eine Kompression der Speicherfeder 50 erfolgt. Da der Federspeicherkolben 52 in die Speicherfeder 50 komprimierende Richtung verschoben wird, kann die Druckstange 56 folgen, was durch nicht dargestellte Rückstellelemente bewirkt wird, die wahlweise im Kombizylinder 18 oder in einer dem Kombizylinder nachgeordneten Einheit der Bremse angeordnet sind. Damit die Druckstange 56 dem Federspeicherkolben 52 folgen kann, muss in der Betriebsbremskammer 48 ein entsprechend niedriger Druck vorliegen; insbesondere ist die Betriebsbremskammer 48 vollständig entlüftet. Bei einem Betriebszustand gemäß Figur 2c sind sowohl die Federspeicherdruckkammer 38 als auch die Betriebsbremsdruckkammer 48 belüftet. Dies hat zur Folge, dass zwar der Federspeicherdruckkolben 52 in die Speicherfeder 50 komprimierende Richtung verschoben wird, die Druckstange 56 aber nicht dem Federspeicherkolben 52 folgt, sondern durch die Druckbeaufschlagung des mit der Druckstange 56 fest verbundenen Betriebsbremskolbens in eine die Bremse betätigende Richtung verschoben wird. Die Darstellung gemäß Figur 2 ist stark schematisiert. Insbesondere sind Dichtelemente zwischen den einzelnen Kammern, insbesondere der Federspeicherdruckkammer 38 und der Betriebsbremsdruckkammer 48 sowie im Bereich der Kolben 52 und 54 nicht dargestellt.

Anhand von Figur 1 erkennt man nun, dass der Steuereingang 14 des Relaisventils 12 nicht nur von dem Handbremsventil 10 mit Druckluft beaufschlagt werden kann, sondern auch von einem Betriebsbremsventil, insbesondere unmittelbar von einem Fußbremsventil 36 oder mittelbar von einem einem Fußbremsventil nachgeordneten Relaisventil. Zu diesem Zweck ist ein Wechselventil 40 vorgesehen, dessen erster Drucklufteingang 42 mit dem Handbremsventil 10 in Verbindung steht, während sein zweiter Drucklufteingang 44 mit dem Betriebsbremsventil 36, jeweils unmittelbar oder mittelbar, verbunden ist. Am Ausgang 46 des Wechselventils 40 liegt jeweils der höhere der beiden an den Eingängen 42, 44 anliegenden Drücke an. Wird also beispielsweise lediglich das Handbremsventil 10 geöffnet, so führt dies zu einer Belüftung der Federspeicherdruckkammer 38 mit einem Druck, der von dem von dem Handbremsventil 10 durchgesteuerten Druck abhängt; es liegt der Betriebszustand gemäß Figur 2b vor. Wird das Handbremsventil 10 in seine Entlüftungsstellung überführt und bleibt auch das Betriebsbremsventil in einer Stellung, die ein Belüften des Steuereingans 14 des Relaisventils 12 verhindert, so nimmt der Kombizylinder 18 seine Stellung gemäß Figur 2a ein. Wird aber das Betriebsbremsventil 36 geöffnet, so stellt sich der Betriebszustand gemäß Figur 2c ein, denn das Betriebsbremsventil 36 ist auf anderem, nicht dargestelltem Wege dafür verantwortlich, dass die Betriebsbremsdruckkammer 48 des Kombizylinders 18 belüftet wird, und die Belüftung des Steuereingangs 14 durch das Betriebsbremsventil 36 führt zu einem Druckaufbau in der Federspeicherdruckkammer 38, woraufhin der Federspeicherkolben 52 zurückgetrieben und die Speicherfeder 50 komprimiert wird. Insbesondere wird der Zustand gemäß Figur 2c bei betätigtem Betriebsbremsventil 36 unabhängig davon eingenommen, ob das Handbremsventil 10 in seiner belüftenden oder entlüftenden Stellung steht.

Geht man nun von einem Fahrzeug mit eingelegter Feststellbremse aus, das heißt der Betriebszustand gemäß Figur 2a liegt vor, so erkennt man folgendes. Wird die Betriebsbremse betätigt, so führt dies nicht dazu, dass zusätzlich zu der durch die Speicherfeder 50 aufgebrachte Kraft auf die Druckstange 56 und die nachgeordnete Bremse nun auch noch die durch den Betriebsbremsdruck in der Betriebsbremskammer aufgebrachte Kraft auf die Bremse wirkt, denn es wird bei Betätigung des Betriebsbremsventils 36 der Zustand 2c angenommen, bewirkt durch die gleichzeitige Belüftung der Druckkammern 48, 38 gemäß dem Betriebsbremsdruck. Dies schont die Bremse. Geht man weiterhin von einem Fahrzeug mit gelöster Feststell- und Betriebsbremse aus, also einem Fahrzeug, bei dem sich der Kombizylinder 18 in dem Betriebszustand gemäß Figur 2b befindet, so beobachtet man beim Betätigen des Betriebsbremsventils 36 ebenfalls einen Übergang zum Betriebszustand gemäß Figur 2c, wobei in der Federspeicherdruckkammer 38 nun nicht mehr ein Druck vorliegt, der von dem von dem Handbremsventil 10 zur Verfügung gestellten Druck abhängt, sondern ein solcher, den der von dem Betriebsbremsventil 36 über das Wechselventil 40 den Steuereingang 14 zugeführte Druck regiert, denn letzterer ist im Allgemeinen höher. Bei einer Betriebsbremsung ausgehend vom Betriebszustand gemäß Figur 2b wird somit der Federspeicherkolben 52 zwar von der Kraft der Druckstange, die von den nicht dargestellten Rückstellmitteln erzeugt wird, befreit, allerdings wird im gleichen Zuge der Druck in der Federspeicherdruckkammer 38 erhöht, so dass der Federspeicherkolben 52 der Druckstange 56 nicht oder nur in geringerem Maße folgt, als würde der Druck in der Federspeicherdruckkammer 38 schlicht aufrechterhalten. Auch dies ist materialschonend, insbesondere für die Speicherfeder 50, da diese weniger oft oder weniger intensiv dekomprimiert und komprimiert wird.

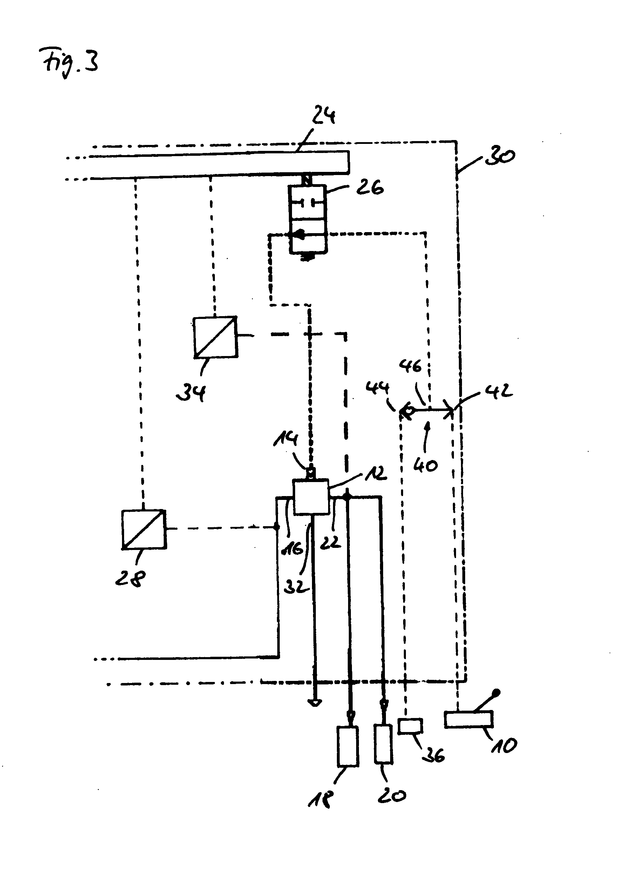

Figur 3 zeigt einen Teil einer Luftaufbereitungsanlage mit einer darin teilweise integrierten erfindungsgemäßen Feststellbremsanlage. Die Luftaufbereitungsanlage 30 kann, insbesondere im Hinblick auf die nicht dargestellten Komponenten, beispielsweise so aufgebaut sein, wie es in der bereits im Zusammenhang mit der Beschreibung des Standes der Technik zitierten DE 103 41 723 A1 beschrieben ist. Unterschiede bestehen im Zusammenhang mit der Auslegung der Feststellbremsanlage. Zusätzlich zu den bereits im Zusammenhang mit Figur 1 beschriebenen Komponenten sind zwei Drucksensoren 28, 34 vorgesehen, wobei der erste Drucksensor 28 einen versorgungsseitigen Druck und der zweite Drucksensor 34 einen den Federspeicherzylindern 18, 20 zugeordneten Druck erfasst. Die Drucksensoren 28, 34 geben ihre Werte an eine elektronische Steuerung 24 weiter, welche zur Steuerung zahlreicher Vorgänge innerhalb der Luftaufbereitungsanlage 30 vorgesehen ist und an die insbesondere ein 2/2-Wegemagnetventil 26 angeschlossen ist. Dieses 2/2-Wegemagnetventil ist im stromlosen Zustand geöffnet, und es verbindet das Handbremsventil 10 mit dem Steuereingang 14 des Relaisventils 12.

Die dargestellte Anlage arbeitet wie folgt. Wird das Nutzfahrzeug in Betrieb genommen, so schaltet die elektronische Steuerung 24 das Magnetventil 26 um, so dass es die Verbindung zwischen dem Handbremsventil 10 und dem Steuereingang 14 des Relaisventils 12 sperrt. Folglich kann ein Druckaufbau im Nutzfahrzeug erfolgen, ohne dass die Federspeicherzylinder 18, 20 belüftet werden könnten. Es wird dann erfasst, ob ein Fahrer des Nutzfahrzeugs anwesend ist. Dies kann beispielsweise über einen Sitzsensor, einen Sicherheitsgurtsensor oder einen Pedalsensor, der beispielsweise dem Bremspedal zugeordnet ist, erfolgen. Ist der Fahrer anwesend und ist insbesondere weiterhin auch der druckluftversorgungsseitige Druck, der von dem Drucksensor 28 erfasst wird, in einem Bereich, bei dem die Hilfsbremswirkung des Betriebsbremssystems zur Verfügung steht, kann das Magnetventil 26 in seinen stromlosen Zustand überführt werden; folglich wird die Verbindung zwischen dem Handbremsventil 10 und dem Steuereingang 14 des Relaisventils 12 freigegeben. Durch Betätigen des Handbremsventils 10 kann nun der Steuereingang 14 des Relaisventils 12 belüftet werden. Folglich können die Federspeicherzylinder 18, 20 belüftet werden, wodurch die Feststellbremse gelöst wird.

Das bereits in Zusammenhang mit Figur 1 beschriebene Wechselventil 40 ist hier so angeordnet, dass sein Ausgang 46 über die Ventileinrichtung 26 mit dem Steuereingang 40 des Relaisventils 12 verbunden ist. Auf diese Weise kann dem Steuereingang 14 des Relaisventils 12 der jeweils höhere Druck, der an den Eingängen 42, 44 des Wechselventils 40 anliegt, zugeführt werden. In diesem Zusammenhang ist jedoch die Situation zu berücksichtigen, dass der Fahrer bei unbestromter Ventileinrichtung 26 und eingelegter Feststellbremse das Betriebsbremsventil 36 betätigt. Hierdurch kommt es zu einem Druckaufbau am Steuereingang 14 des Relaisventils 12 und somit am Ausgang 22 des Relaisventils. Dieser Druckaufbau wird zunächst im Kombizylinder 18, 20 vom Betriebsbremsdruck kompensiert, so dass ein Lösen der Bremse ausbleibt. Wird nun in diesem Zustand aber die Ventileinrichtung 26 bestromt, so dass der Weg vom Wechselventil 40 zum Steuereingang 14 des Relaisventils 12 gesperrt wird, so würde ein Entlüften des Betriebsbremsventils 36, also beispielsweise ein Lösen der Fußbremse, dann dazu führen, dass sich zwar der Betriebsbremsdruck in der Betriebsbremskammer 48 abbaut, der auf den Steuereingang 14 des Relaisventils 12 wirkende Druck hingegen nicht. Folglich könnte es so zu einem unbeabsichtigten Lösen der Bremse kommen. Diesem Umstand wird begegnet, indem der Druck am Ausgang 22 des Relaisventils 12 mit dem Drucksensor 34 überwacht wird. Liegt hier ein Druck vor, der zum Lösen der Feststellbremse führen würde oder einen sonstigen Druckschwellenwert überschreitet, so sorgt die Steuerung 24 dafür, dass die Ventileinrichtung 26 nicht geschlossen werden kann.

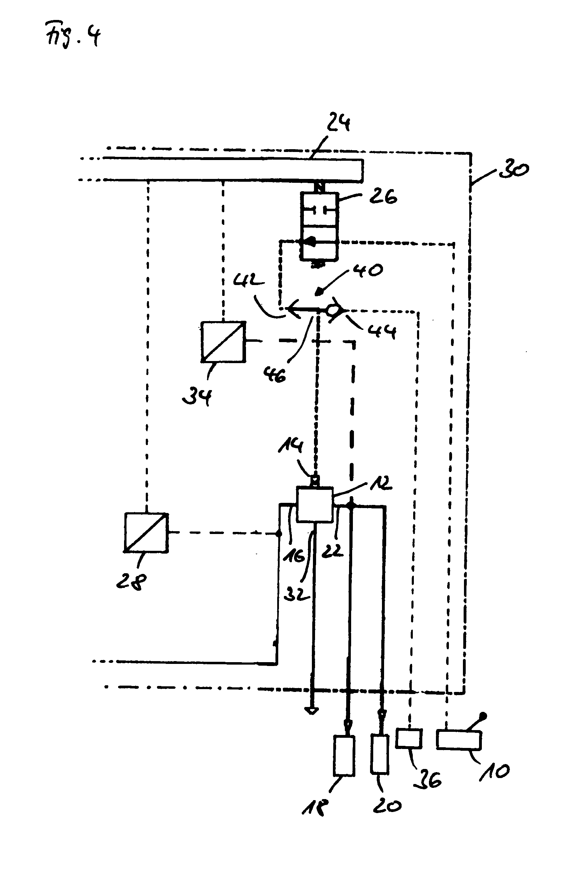

Figur 4 zeigt einen Teil einer Luftaufbereitungsanlage mit einer darin teilweise integrierten erfindungsgemäßen Feststellbremsanlage in einer weiteren Ausführungsform. Im Gegensatz zu Figur 3 ist hier das Wechselventil 40 so angeordnet, dass dessen Drucklufteingang 42 über die Ventileinrichtung 26 mit dem Handbremsventil 10 verbunden ist. Das Betriebsbremsventil 36 ist hingegen direkt mit dem Drucklufteingang 44 des Wechselventils 40 gekoppelt. Der Ausgang 46 des Wechselventils 40 liegt direkt am Steuereingang 40 des Relaisventils 12. Bei dieser Konstruktion kann es nun nicht mehr zu dem im Zusammenhang mit Figur 3 beschriebenen "Einsperren" des von dem Betriebsbremsventil 36 zur Verfügung gestellten Druckes zwischen Ventileinrichtung 26 und Steuereingang 14 kommen, so dass im Hinblick auf diese Funktionalität der Drucksensor 34 im Prinzip überflüssig ist. Allerdings kann es aus anderen Gründen sinnvoll sein, den Druck am Ausgang 22 des Relaisventils 12 zu überwachen, so dass der Drucksensor 34 auch bei der Feststellbremse gemäß Figur 4 bevorzugt vorgesehen ist.

Im Zusammenhang mit der Beschreibung der Figuren 3 und 4 wurde ausgeführt, dass die Funktionen der Feststellbremsanlage von der elektronischen Steuereinheit 24 einer Luftaufbereitungsanlage 30 gesteuert werden können. Ebenfalls ist es aber möglich, andere Steuergeräte des Nutzfahrzeugs für diese Funktion vorzusehen, beispielsweise ein ABS-Steuergerät, oder es ist auch möglich, für die beschriebenen Vorgänge ein eigenes Steuergerät vorzusehen, das beispielsweise in der Form eines einzigen Moduls mit der Ventileinrichtung 26 und dem Relaisventil 12 baulich vereinigt ist.

### Bezugszeichenliste:

- 10: Handbremsventil
- 12: Relaisventil
- 14: Steuereingang
- 16: Arbeitseingang
- 18: Federspeicherzylinder
- 20: Federspeicherzylinder
- 22: Arbeitsausgang
- 24: elektronische Steuerung
- 26: 2/2-Wegemagnetventil
- 26: Ventileinrichtung
- 26: Magnetventil
- 28: Drucksensor
- 30: Luftaufbereitungsanlage
- 32: Entlüftungsausgang
- 34: Drucksensor
- 36: Betriebsbremsventil
- 38: Federspeicherdruckkammer
- 40: Wechselventil
- 42: Drucklufteingang
- 44: Drucklufteingang
- 46: Ausgang des Wechselventils
- 48: Betriebsbremsdruckkammer
- 50: Speicherfeder
- 52: Federspeicherkolben
- 54: Betriebsbremskolben
- 56: Druckstange
- 58: Gehäuse

## Patentansprüche

1. Feststellbremsanlage für ein Nutzfahrzeug, mit
- einer elektronischen Steuereinheit (24),
- einer Handbremsventileinrichtung, die geeignet ist, einen ersten Druck unmittelbar oder mittelbar zur Verfügung zu stellen,
- einem Betriebsbremsventil (36), das geeignet ist, einen zweiten Druck unmittelbar oder mittelbar zur Verfügung zu stellen,
- einem Relaisventil (12), das einen Steuereingang (14), dem der erste oder der zweite Druck zuführbar ist, einen mit einem Druckluftvorrat des Nutzfahrzeugs verbundenen Arbeitseingang (16) und einen mit mindestens einer Federspeicherdruckkammer (38) eines Kombizylinders (18, 20) verbundenen Arbeitsausgang (22) aufweist,
- einem Steuerventil (40), welches einen ersten Drucklufteingang (42), einen zweiten Drucklufteingang (44) und einen mit dem Steuereingang (14) des Relaisventils (12) gekoppelten Druckluftausgang (46) aufweist, wobei dem ersten Drucklufteingang (42) der erste Druck und dem zweiten Drucklufteingang (44) der zweite Druck zuführbar sind und wobei an dem Druckluftausgang (46) der höhere der an den Drucklufteingängen (42, 44) anliegenden Drücke anliegt,
**dadurch gekennzeichnet,**
- **dass** die Handbremsventileinrichtung ein Handbremsventil (10) ist, und
- **dass** die Feststellbremsanlage weiterhin umfasst:
- eine zwischen dem Handbremsventil (10) und dem Steuereingang (14) des Relaisventils (12) angeordneten, von der elektronischen Steuereinheit elektrisch schaltbare Ventileinrichtung (26),
- wobei bei Anwesenheit einer Person zur Führung des Nutzfahrzeugs ein von der elektronischen Steuereinheit (24) elektrisch auswertbarer Indikator zur Verfügung stellbar ist und
- wobei die elektronische Steuereinheit (24) geeignet ist, mittels der elektrisch schaltbaren Ventileinrichtung (26) ein Belüften des mindestens einen Federspeicherzylinders (18, 20) zu verhindern, wenn der Indikator nicht vorliegt.

2. Feststellbremsanlage nach Anspruch 1, **dadurch gekennzeichnet, dass** das Steuerventil (40) ein Wechselventil (40) ist.

3. Feststellbremsanlage nach Anspruch 1 oder 2, **dadurch gekennzeichnet, dass** die Ventileinrichtung (26) zwischen dem Steuerventil (40) und dem Steuereingang (14) des Relaisventils (12) angeordnet ist, so dass an einem Drucklufteingang der Ventileinrichtung (26) entweder der erste oder der zweite Druck anliegt.

4. Feststellbremsanlage nach Anspruch 3, **dadurch gekennzeichnet, dass** ein mit der elektronischen Steuereinheit (24) elektrisch gekoppelter Drucksensor (34) zum Erfassen eines Ausgangsdruckes des Relaisventils (12) vorgesehen ist, wobei die elektronische Steuereinheit (24) geeignet ist, ein Sperren der Ventileinrichtung (26) zu verhindern, wenn der Ausgangsdruck des Relaisventils (12) einen vorgegebenen Schwellenwert überschreitet.

5. Feststellbremsanlage nach Anspruch 1 oder 2, **dadurch gekennzeichnet, dass** die Ventileinrichtung (26) in einem den ersten Druck führenden Leitungsabschnitt angeordnet ist und der erste Drucklufteingang (42) des Steuerventils (40) mit einem Druckluftausgang der Ventileinrichtung (26) verbunden ist, während dem zweiten Drucklufteingang (44) des Steuerventils der zweite Druck direkt zuführbar ist.

6. Feststellbremsanlage nach einem der vorhergehenden Ansprüche, **dadurch gekennzeichnet, dass** die Ventileinrichtung ein 2/2-Wegeventil (26) ist.

7. Feststellbremsanlage nach einem der vorhergehenden Ansprüche, **dadurch gekennzeichnet, dass** die Ventileinrichtung (26) im stromlosen Zustand das Handbremsventil (10) mit dem Steuereingang (14) des Relaisventils (12) pneumatisch verbindet und im bestromten Zustand das Handbremsventil (10) von dem Steuereingang (14) des Relaisventils (12) pneumatisch trennt.

8. Feststellbremsanlage nach einem der vorhergehenden Ansprüche, **dadurch gekennzeichnet, dass** ein mit der elektronischen Steuereinheit (24) elektrisch gekoppelter Drucksensor (28) zum Erfassen eines druckluftvorratsseitigen Druckes vorgesehen ist, wobei die elektronische Steuereinheit (24) geeignet ist, mittels der elektrisch schaltbaren Ventileinrichtung (26) ein Belüften des mindestens einen Federspeicherzylinders (18, 20) zu verhindern, wenn ein von dem Drucksensor (28) erfasster Druck unterhalb eines Druckschwellenwertes liegt.

9. Feststellbremsanlage nach einem der vorhergehenden Ansprüche, **dadurch gekennzeichnet, dass** das Relaisventil (12) und/oder die Ventileinrichtung (26) und/oder der Drucksensor (28) und/oder die elektronische Steuereinheit (24) in eine elektronische Luftaufbereitungsanlage (30) integriert sind.

## Claims

1. Parking brake system for a commercial vehicle, comprising
- an electronic control unit (24),
- a parking brake valve device suitable for making a first pressure available directly or indirectly,
- a service brake valve (36) suitable for making a second pressure available directly or indirectly,
- a relay valve (12) having a control inlet (14), to which the first or the second pressure can be applied, an operating inlet (16) connected to a compressed air reservoir of the commercial vehicle and an operating outlet (22) connected to at least one spring pressure chamber (38) of a combination cylinder (18, 20),
- a control valve (40) having a first compressed air inlet (42), a second compressed air inlet (44) and a compressed air outlet (46) connected to the control inlet (14) of the relay valve (12), wherein the first pressure can be fed to the first compressed air inlet (42) and the second pressure can be fed to the second compressed air inlet (44) and wherein the higher of the pressures applied to the compressed air inlets (42, 44) is applied to the compressed air outlet (46),
**characterised in that**
- the parking brake valve device is a parking brake valve (10), and
- the parking brake system further comprises:
- a valve device (26) located between the parking brake valve (10) and the control inlet (14) of the relay valve (12) and electrically switchable by the electronic control unit,
- wherein, in the presence of a person for driving the commercial vehicle, an electrically evaluable indicator can be made available by the electronic control unit (24), and
- wherein the electronic control unit (24) is suitable for preventing a ventilation of the spring brake cylinder (18, 20) by means of the electrically switchable valve device (26) in the absence of the indicator.

2. Parking brake system according to claim 1, **characterised in that** the control valve (40) is a shuttle valve (40).

3. Parking brake system according to claim 1 or 2, **characterised in that** the valve device (26) is located between the control valve (40) and the control inlet (14) of the relay valve (12), so that either the first or the second pressure is applied to a compressed air inlet of the valve device (26).

4. Parking brake system according to claim 3, **characterised in that** a pressure sensor (34) electrically coupled to the electronic control unit (24) is provided for detecting an outlet pressure of the relay valve (12), the electronic control unit (24) being suitable for preventing a blocking of the valve device (26) if the outlet pressure of the relay valve (12) exceeds a preset threshold value.

5. Parking brake system according to claim 1 or 2, **characterised in that** the valve device (26) is located in a line section carrying the first pressure and the first compressed air inlet (42) of the control valve (40) is connected to a compressed air outlet of the valve device (26), while the second pressure can be directly supplied to the second compressed air inlet (44) of the control valve.

6. Parking brake system according to any of the preceding claims, **characterised in that** the valve device is a 2/2-way valve (26).

7. Parking brake system according to any of the preceding claims, **characterised in that** the valve device (26) pneumatically connects the parking brake valve (10) to the control inlet (14) of the relay valve (12) in the de-energised state and pneumatically disconnects the parking brake valve (10) from the control inlet (14) of the relay valve (12) in the energised state.

8. Parking brake system according to any of the preceding claims, **characterised in that** a pressure sensor (28) electrically coupled to the electronic control unit (24) is provided for detecting a compressed air reservoir-side pressure, the electronic control unit (24) being suitable for preventing a ventilation of the at least one spring brake cylinder (18, 20) by means of the electrically switchable valve device (26), if a pressure detected by the pressure sensor (28) is below a pressure threshold value.

9. Parking brake system according to any of the preceding claims, **characterised in that** the relay valve (12) and/or the valve device (26) and/or the pressure sensor (28) and/or the electronic control unit (24) is/are integrated into an electronic air preparation system (30).

## Revendications

1. Système de frein de stationnement d'un véhicule utilitaire, comprenant
- une unité (24) de commande électronique,
- un dispositif de soupape de frein à main, propre à mettre à disposition directement ou indirectement une première pression,
- une soupape (36) de frein de fonctionnement, propre à mettre à disposition directement ou indirectement une deuxième pression,
- une soupape (12) relais, qui a une entrée (14) de commande, à laquelle la première ou la deuxième pression peut être envoyée, une entrée (16) de travail reliée à un réservoir d'air comprimé du véhicule utilitaire et une sortie (22) de travail reliée à au moins une chambre (38) de pression à ressort accumulateur d'un cylindre (18, 20) double de frein,
- une soupape (40) de commande, qui a une première entrée (42) d'air comprimé, une deuxième entrée (44) d'air comprimé et une sortie (46) d'air comprimé couplée à l'entrée (14) de commande de la soupape (12) relais, la première pression pouvant être envoyée à la première entrée (42) d'air comprimé et la deuxième pression à la deuxième entrée (44) d'air comprimé et la plus haute des pressions, s'appliquant aux entrées (42, 44) d'air comprimé, s'appliquant à la sortie (46) d'air comprimé,
**caractérisé**
- **en ce que** le dispositif de soupape de frein à main est une soupape (10) de frein à main et
- **en ce que** le système de frein de stationnement comprend, en outre :
- un dispositif (26) de soupape, disposé entre la soupape (10) de frein à main et l'entrée (14) de commande de la soupape (12) relais et pouvant être commuté électriquement par l'unité de commande électronique,
- dans lequel, en présence d'une personne pour conduire le véhicule utilitaire, un indicateur pouvant être exploité électriquement par l'unité (24) de commande électronique peut être mis à disposition et
- dans lequel l'unité (24) de commande électronique est propre à empêcher, au moyen du dispositif (26) de soupape pouvant être commuté électriquement, une alimentation en air du au moins un cylindre (18, 20) à ressort accumulateur, lorsque l'indicateur n'est pas présent.

2. Système de frein de stationnement suivant la revendication 1, **caractérisé en ce que** la soupape (40) de commande est un sélecteur (40) de circuit.

3. Système de frein de stationnement suivant la revendication 1 ou 2, **caractérisé en ce que** le dispositif (26) de soupape est monté entre la soupape (40) de commande et l'entrée (14) de commande de la soupape (12) relais, de manière à appliquer la première ou la deuxième pression à une entrée d'air comprimé du dispositif (26) de soupape.

4. Système de frein de stationnement suivant la revendication 3, **caractérisé en ce qu'**il est prévu, pour détecter une pression de sortie de la soupape (12) relais, un capteur (34) de pression couplé électriquement à l'unité (24) de commande électronique, l'unité (24) de commande électronique étant propre à empêcher une fermeture du dispositif (26) de soupape, lorsque la pression de sortie de la soupape (12) relais dépasse une valeur de seuil donnée à l'avance.

5. Système de frein de stationnement suivant la revendication 1 ou 2, **caractérisé en ce que** le dispositif (26) de soupape est monté dans un tronçon de ligne conduisant la première pression et la première entrée (42) d'air comprimé de la soupape (40) de commande communique avec une sortie d'air comprimé du dispositif (26) de soupape, tandis que la deuxième pression peut être envoyée directement à la deuxième entrée (44) d'air comprimé de la soupape de commande.

6. Système de frein de stationnement suivant l'une des revendications précédentes, **caractérisé en ce que** le dispositif de soupape est une soupape (26) à 2/2 voies.

7. Système de frein de stationnement suivant l'une des revendications précédentes, **caractérisé en ce que** le dispositif (26) de soupape relie pneumatiquement, à l'état sans courant, la soupape (10) de frein à main à l'entrée (14) de commande de la soupape (12) relais et, à l'état alimenté en courant, sépare pneumatiquement la soupape (10) de frein à main de l'entrée (14) de commande de la soupape (12) relais.

8. Système de frein de stationnement suivant l'une des revendications précédentes, **caractérisé en ce qu'**il est prévu, pour détecter une pression du côté du réservoir d'air comprimé, un capteur (28) de pression couplé électriquement à l'unité (24) de commande électronique, l'unité (24) de commande électronique étant propre à empêcher, au moyen du dispositif (26) de soupape pouvant être commuté électriquement, une alimentation en air du au moins un cylindre (18, 20) à ressort accumulateur, lorsqu'une pression détectée par le capteur (28) de pression est inférieure à une valeur de seuil de la pression.

9. Système de frein de stationnement suivant l'une des revendications précédentes, **caractérisé en ce que** la soupape (12) relais et/ou le dispositif (26) de soupape et/ou le capteur (28) de pression et/ou l'unité (24) de commande électronique sont intégrés dans un système (30) électronique de traitement de l'air.
